# EUROPÄISCHE PATENTSCHRIFT

(11) **EP 1 238 030 B1**
(45) Veröffentlichungstag und Bekanntmachung des Hinweises auf die Patenterteilung: **08.10.2003**
(21) Anmeldenummer: 00993264.1
(22) Anmeldetag: 01.12.2000
(51) Int. Cl.: C09D 183/08, C08G 77/22, C08G 77/24, C08G 77/26

(54) **SELBSTVERNETZENDE BESCHICHTUNGSZUSAMMENSETZUNGEN AUF BASIS ANORGANISCHER FLUORHALTIGER POLYKONDENSATE**
SELF-CROSS-LINKING COATING COMPOSITIONS ON THE BASIS OF INORGANIC FLUORINE-CONTAINING POLYCONDENSATES
COMPOSITIONS DE REVETEMENT AUTORETICULANTES A BASE DE POLYCONDENSATS INORGANIQUES CONTENANT DU FLUOR

(30) Priorität: 03.12.1999 DE 19958336
(43) Veröffentlichungstag der Anmeldung: 11.09.2002
(73) Patentinhaber: INSTITUT FÜR NEUE MATERIALIEN GEM. GMBH, 66123 Saarbrücken (DE)
(72) Erfinder: BRÜCK, Stefan, 66117 Saarbrücken (DE); LESNIAK, Christoph, 87474 Buchenberg (DE); SCHIRRA, Hermann, 66111 Saarbrücken (DE); SCHMIDT, Helmut, 66130 Saarbrücken-Güdingen (DE)
(74) Vertreter: Barz, Peter, Dr.
(86) Internationale Anmeldenummer: EP0012119
(87) Internationale Veröffentlichungsnummer: WO01040394

(56) Entgegenhaltungen:
- WO-A-92/21729
- DE-A- 19 544 763
- DE-A- 19 649 955
- US-A- 5 547 711
- US-A- 5 644 014

## Beschreibung

Die Erfindung betrifft ein selbstvernetzendes Beschichtungssystem auf Basis anorganischer fluorhaltiger Polykondensate, ein Verfahren zum Beschichten von Substraten mit dieser Beschichtungszusammensetzung und damit erhältliche beschichtete Substrate.

Dünne, häufig fast monomolekulare Schichten und Imprägnierungen aus Silanen und Siloxanen mit perfluorierten Seitengruppen werden verwendet, um die Oberfläche von Substraten wasser- und ölabweisend zu machen. Durch die wenige Nanometer dicken Schichten oder Imprägnierungen ergibt sich aber kein dauerhafter Schutz der Substratoberfläche bei mechanischer oder chemischer Beanspruchung.

In EP 0 587 667 (entspricht DE 4 118 184) werden dauerhafte Beschichtungszusammensetzungen auf Basis von Polykondensaten von einer oder mehreren hydrolysierbaren Verbindungen M aus den Hauptgruppen III bis V und den Nebengruppen II bis IV des Periodensystems der Elemente beschrieben, wobei zumindest ein Teil dieser Verbindungen hydrolysierbare Verbindungen mit perfluorierten Seitengruppen, insbesondere hydrolysierbare Silane mit perfluorierten Gruppen sind. Bei diesen Beschichtungszusammensetzungen ist eine Härtung möglich, es ist aber notwendig, die Vernetzung auf dem Substrat durch eine photochemische Polymerisation oder eine thermische Polymerisation bei einer Temperatur von mindestens 50°C durchzuführen. Dadurch ist die Anwendung technisch aufwendig, weil entsprechende Härtungseinrichtungen benötigt werden. Insbesondere für großflächige Anwendungen, z. B. auf Gebäudefassaden, stellt dies eine beträchtliche Einschränkung dar.

Der vorliegenden Erfindung liegt die Aufgabe zugrunde, eine Verfahren zum Beschichten von Substraten bereitzustellen, das Überzüge mit Antihaft-Eigenschaften ohne einen besonderen Härtungsschritt und ohne eine spezielle Härtungseinrichtung liefert. Diese Überzüge sollen dennoch z.B. gegenüber chemischer oder mechanischer Beanspruchung dauerhaft und kratzfest sein. Außerdem soll das Beschichtungsmaterial in einer einfach handhabbaren und lagerstabilen Form bereitgestellt werden.

Diese Aufgabe wird erfindungsgemäß gelöst durch ein Verfahren zum Beschichten eines Substrats, bei dem man eine selbstvernetzende Beschichtungszusammensetzung auf Basis von
a) mindestens einem hydrolysierbaren Silan mit mindestens einem nicht hydrolysierbaren Substituenten, wobei das Silan an mindestens einem nicht hydrolysierbaren Substituenten eine oder mehrere elektrophile Gruppen X aufweist,
b) mindestens einem hydrolysierbaren Silan mit mindestens einem nicht hydrolysierbaren Substituenten, wobei das Silan an mindestens einem nicht hydrolysierbaren Substituenten eine oder mehrere nukleophile Gruppen Y aufweist, und
c) mindestens einem hydrolysierbaren Silan mit mindestens einer nicht hydrolysierbaren kohlenstoffhaltigen Gruppe, die durchschnittlich 2 bis 30 Fluoratome aufweist, die an ein oder mehrere aliphatische Kohlenstoffatome gebunden sind, welche durch mindestens zwei Atome von dem Siliciumatom getrennt sind,
wobei die Silane (a), (b) und/oder (c) gegebenenfalls vorkondensiert sind und wobei entweder die Silane (a) ganz oder teilweise durch organische Verbindungen mit mindestens zwei Gruppen X oder die Silane (b) ganz oder teilweise durch organische Verbindungen mit mindestens zwei Gruppen Y ersetzt werden können,
herstellt, auf ein Substrat aufträgt und bei Umgebungstemperatur (unter 40°C) unter Bildung eines Überzugs härten läßt.

Die in dem erfindungsgemäßen Verfahren eingesetzte Beschichtungszusammensetzung kann z. B. in Form eines einfach handhabbaren und lagerstabilen Zweikomponenten-Beschichtungssystems erhalten werden. Dieses Zweikomponenten-Beschichtungssystem ist gekennzeichnet durch
eine Komponente (A), umfassend mindestens ein, gegebenenfalls vorkondensiertes, hydrolysierbares Silan (a) mit mindestens einem nicht hydrolysierbaren Substituenten, wobei das Silan (a) an mindestens einem nicht hydrolysierbaren Substituenten eine oder mehrere elektrophile Gruppen X aufweist, und
eine Komponente (B), umfassend mindestens ein, gegebenenfalls vorkondensiertes_{,} hydrolysierbaren Silan (b) mit mindestens einem nicht hydrolysierbaren Substituenten, wobei das Silan (b) an mindestens einem nicht hydrolysierbaren Substituenten eine oder mehrere nukleophile Gruppen Y aufweist,
wobei entweder die Silane (a) ganz oder teilweise durch organische Verbindungen mit mindestens zwei Gruppen X oder die Silane (b) ganz oder teilweise durch organische Verbindungen mit mindestens zwei Gruppen Y ersetzt werden können, und
wobei die Komponente A) und/oder die Komponente B) zusätzlich ein hydrolysierbares Silan (c) mit mindestens einer nicht hydrolysierbaren kohlenstoffhaltigen Gruppe, die durchschnittlich 2 bis 30 Fluoratome aufweist, die an ein oder mehrere aliphatische Kohlenstoffatome gebunden sind, welche lurch mindestens zwei Atome von dem Siliciumatom getrennt sind, beinhalten.

In einer speziellen Ausführungsform enthält die erfindungsgemäße Beschichtungszusammensetzung zusätzlich nanoskalige anorganische Feststoffteilchen, die gegebenenfalls oberflächenmodifiziert sind.

Konkrete Beispiele für die elektrophile Gruppe X sind die Epoxid-, Anhydrid-, Säurehalogenid- und Isocyanatgruppe ist.

Konkrete Beispiele für die nukleophile Gruppe Y sind die Amino- und die Hydroxylgruppe.

Als besonders geeignet für die bei Umgebungstemperatur ablaufende Selbstvernetzung haben sich die Paarungen Epoxid/Amino und Isocyanat/Hydroxy erwiesen.

Erfindungsgemäß werden selbsthärtende, hochkratzfeste Beschichtungen mit niedriger Oberflächenenergie erhalten, die besonders gut am beschichteten Substrat haften, ohne daß ein besonderer Härtungsschritt erforderlich ist. Die erhaltenen Überzüge weisen hervorragende Antihaft- und Easy-to-clean-Eigenschaften auf.

In dem erfindungsgemäßen Verfahren wird zur Herstellung der Beschichtungszusammensetzung als Komponente a) mindestens ein hydrolysierbares Silan mit mindestens einem nicht hydrolysierbaren Substituenten verwendet, wobei das Silan an mindestens einem nicht hydrolysierbaren Substituenten eine oder mehrere elektrophile Gruppen X aufweist.

Bei dieser Komponente a) handelt es sich um eine Siliciumverbindungen, die über 1 bis 3, bevorzugt 2 oder 3, besonders bevorzugt 3, hydrolysierbare Reste und 1, 2 oder 3, vorzugsweise 1 oder 2, insbesondere einen nicht hydrolysierbaren Rest verfügt Mindestens einer der nicht hydrolysierbaren Reste verfügt über mindestens eine elektrophile Gruppe X.

Beispiele für hydrolysierbare Gruppen, die gleich oder voneinander verschieden sein können, sind Wasserstoff, Halogen (F, Cl, Br oder 1, insbesondere Cl und Br), Alkoxy (z.B. C₁₋₆-Alkoxy, insbesondere C₁₋₄-Alkoxy, wie z.B. Methoxy, Ethoxy, n-Propoxy, i-Propoxy, n-Butoxy, i-Butoxy, sek.-Butoxy, tert.-Butoxy), Aryloxy (vorzugsweise C₆₋₁₀-Aryloxy, wie z.B. Phenoxy), Acyloxy (z.B. C₁₋₆-Acyloxy, insbesondere C₁₋₄Acyloxy, wie z.B. Acetoxy oder Propionyloxy) und Alkylcarbonyl (vorzugsweise C₂₋₇-Alkylcarbonyl, wie z.B. Acetyl). Bevorzugte hydrolysierbare Reste sind Halogen, Alkoxygruppen und Acyloxygruppen. Besonders bevorzugte hydrolysierbare Reste sind Alkoxygruppen, insbesondere Methoxy und Ethoxy.

Beispiele für nicht hydrolysierbare Reste, die keine Gruppe X enthalten, sind Alkyl (vorzugsweise C₁₋₈-Alkyl, wie Methyl, Ethyl, n-Propyl, Isopropyl, n-Butyl, s-Butyl und t-Butyl, Pentyl, Hexyl, Octyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl). Die Reste können gegebenenfalls einen oder mehrere übliche Substituenten, wie z.B. Halogen oder Alkoxy, oder funktionelle Gruppen, die nicht zu den elektrophilen Gruppen X gehören, LB. (Meth)acrylgruppen und (Meth)acryloxygruppen aufweisen.

Geeignete elektrophile Gruppen X sind dem Fachmann bekannt. Vorzugsweise handelt es sich z B. um Epoxid-, Anhydrid-, Säurehalogenid- oder Isocyanatgruppen. Sofern mehrere elektrophile Gruppen X in dem Silan enthalten sind oder sofem verschiedene Silane mit elektrophilen Gruppen X verwendet werden, kann X die gleiche oder verschiedene Bedeutung haben.

Beispiele für nicht hydrolysierbare Reste mit Epoxidgruppe sind insbesondere solche, die über eine Glycidyl- bzw. Glycidyloxygruppe verfügen. Konkrete Beispiele für erfindungsgemäß einsetzbare Silane der Komponente a) mit einer Epoxidgruppe können z.B. der EP 0 195 493 entnommen werden, deren Offenbarung durch Bezugnahme in die vorliegende Anmeldung aufgenommen wird.

Bei den nicht hydrolysierbaren Resten mit Säurehalogenidgruppen oder Säureanhydridgruppen X kann es sich z B. um Reste handeln, die sich von Carbonsäureanhydriden oder Carbonsäurehalogeniden ableiten. Bei den Halogeniden kann es sich um das Säurehalogenid, -bromid oder -iodid handeln, wobei die Säurechloride bevorzugt sind. Es kann sich um Anhydride oder Halogenide von geradkettigen oder verzweigten, aliphatischen, cycloaliphatischen oder aromatischen Carbonsäuren handeln, zB. Anhydride und Halogenide von C₁-C₈-Alkylcarbonsäuren, wie Essigsäure, Propionsäure, Buttersäure und Malonsäure, C₁-C₈-Alkenylcarbonsäuren, wie Maleinsäure, oder C₆-C₂₅-Arylcarbonsäuren, wie Phthalsäure. Konkrete Beispiele sind Propionsäurechlorid, Acetylchtorid, Sulfonsäurechlorid, Bernsteinsäureanhydrid, Maleinsäureanhydrid, Phthalsäureanhydrid und Acetanhydrid.

Die elektrophile Gruppe X kann direkt an das Silan gebunden sein, bevorzugt ist sie aber über eine Verknüpfungsgruppe an das Silan gebunden. Weitere und konkrete Beispiele für hydrolysierbare und nicht hydrolysierbare Gruppen und für einsetzbare Silane werden nachstehend aufgeführt.

Erfindungsgemäß besonders bevorzugte hydrolysierbare Silane mit einer elektrophilen Gruppe X sind diejenigen der allgemeinen Formel (I):

Z₃SiR (I)

in welcher die Reste Z, gleich oder verschieden voneinander (vorzugsweise identisch), für eine hydrolysierbare Gruppe stehen, und z. B. ein Halogen (F, Cl, Br und 1, insbesondere Cl und Br), Alkoxy (zB. C₁₋₆-Alkoxy, insbesondere C₁₋₄-Alkoxy, wie zB. Methoxy, Ethoxy, n-Propoxy, i-Propoxy, n-Butoxy, i-Butoxy, sek.-Butoxy und tert.-Butoxy), Aryloxy (insbesondere C₆₋₁₀-Aryloxy, zB. Phenoxy), Acyloxy (z.B. C₁₋₆-Acyloxy insbesondere C₁₋₄-Acyloxy, wie zB. Acetoxy und Propionyloxy) und Alkylcarbonyl (zB. Acetyl) sind, und R eine nicht hydrolysierbare Gruppe ist, die mindestens eine elektrophile Gruppe X aufweist. Besonders bevorzugte hydrolysierbare Gruppen Z sind C₁₋₄-Alkoxy und insbesondere Methoxy und Ethoxy.

Die nicht hydrolysierbare Gruppe R kann z B. eine Gruppe R"X sein, wobei X die elektrophile Gruppe ist und R" eine Brückengruppe ist, die die Gruppe X mit dem Silicium verbindet. Die Gruppe R" kann eine Alkylen-, Alkenylen- oder Arylen-Brückengruppe sein, die durch Sauerstoff- oder -NH-Gruppen unterbrochen sein kann. Die genannten Brückengruppen leiten sich z.B. von Alkylresten (vorzugsweise C₁₋₂₀-Alkyl, wie Methyl, Ethyl, n-Propyl, Isopropyl, n-Butyl, s-Butyl und t-Butyl, Pentyl, Hexyl, Octyl oder Cydohexyl), Alkenylresten (vorzugsweise C₂₋₆Alkenyl, wie z.B. Vinyl, 1-Propenyl, 2-Propenyl und Butenyl), und Arylresten (vorzugsweise C₆₋₁₀-Aryl, wie z.B. Phenyl und Naphthyl) ab. Die Reste können gegebenenfalls einen oder mehrere übliche Substituenten, wie z.B. Halogen oder Alkoxy, ausweisen. Bei der Gruppe X kann es sich um eine Epoxid-, Säureanhydrid-, Säurehalogenid- oder lsocyanatgruppe handeln. Bevorzugt ist die Epoxidgruppe. Natürlich kann auch mehr als eine elektrophile Gruppe X, gleich oder verschieden, an der Brückengruppe R" gebunden sein.

Ein bevorzugter nicht hydrolysierbarer Rest R mit einer Epoxidgruppe ist ein Glycidyl- oder ein Glycidyloxy-(C₁₋₂₀)-alkylen-Rest Konkrete Beispiele hierfür sind insbesondere β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)-ethyl. Wegen ihrer leichten Zugänglichkeit werden y-Glycidyloxypropyltrimethoxysilan (im folgenden GPTS abgekürzt) und γ-Glycidyloxypropyltriethoxysilan (im folgenden GPTES abgekürzt) erfindungsgemäß besonders bevorzugt eingesetzt.

Beispiele für geeignete lsocyanatsilane sind 3-lsocyanatopropyltriethoxysilan und 3-Isocyanatopropyldimethylchlorsilan. Beispiele für geeignete Silane mit einer Säureanhydridgruppe sind

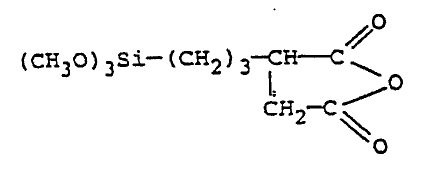

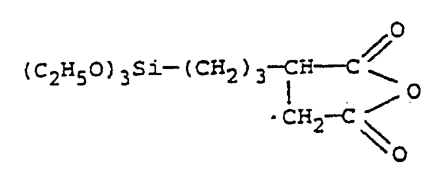

Die Anzahl und Art der hydrolysierbaren Gruppen und der nicht hydrolysierbaren Gruppen für die hydrolysierbaren Silane mit einer nukleophilen Gruppe Y entsprechen der Anzahl und Art nach denen, die vorstehend für die hydrolysierbaren Gruppen mit einer elektrophilen Gruppe X angegeben sind. Insofern kann sinngemäß auf die vorstehenden Erläuterungen verwiesen werden.

Beispiele für nukleophile Gruppen Y sind Aminogruppen und die OH-Gruppe. Beispiele für nicht hydrolysierbare Reste mit Amingruppen leiten sich z.B. von primären, sekundären oder tertiären Aminen ab. Es kann sich z.B. um eine -NH_{2,} -NHR² oder - NR²₂ handeln, wobei R² z.B. eine Gruppe sein kann, die oben für R genannt wurde.

Bevorzugte Silane mit einer nukleophilen Gruppe sind solche der allgemeinen Formel (II):

Z₃SiR' (II)

worin die Reste Z wie im Falle der allgemeinen Formel (I) oben definiert sind, und R' für einen nicht hydrolysierbaren, an Si gebundenen Rest steht, der mindestens eine nukleophile Gruppe Y umfaßt. Die nicht hydrolysierbare Gruppe R' kann z.B eine Gruppe R"Y sein, wobei Y die funktionelle Gruppe ist und R" eine Brückengruppe ist, die die Gruppe Y mit dem Silicium verbindet. R" ist wie im Falle der allgemeinen Formel (I) oben definiert. Y ist zB. eine Amino- oder eine Hydroxygruppe. Natürlich kann auch mehr als eine nukleophile Gruppe Y, gleich oder verschieden, an der Brückengruppe R" gebunden sein.

Konkrete Beispiele für derartige Silane mit Aminogruppe sind 3-Aminopropyltrimethoxysilan (APTS), 3-Aminopropyltriethoxysitan, N-(2-Aminoethyl)-3-aminoproyltrimethoxysilan und N-[N'-(2'-Aminoethyl)-2-aminoethyl]-3-aminopropyltrimethoxysilan. Ein konkretes Beispiel für ein Silan mit Hydroxygruppe ist Hydroxymethyltriethoxysilan. Konkrete Beispiele für Silane mit Amino- und Hydroxygruppe sind Bis-(hydroxyethyl)-3-aminopropyltriethoxysilan und N-Hydroxyethyl-N-methylaminopropyltriethoxysilan.

Das Molverhältnis der elektrophilen Gruppen X zu den nukleophilen Gruppen Y liegt in der erfindungsgemäßen Beschichtungszusammensetzung vorzugsweise im Bereich von 5:1 bis 1:1, vorzugsweise 3:1 bis 2:1.

Entweder die hydrolysierbaren Silanverbindungen mit der elektrophilen Gruppe X können ganz oder teilweise durch organische Verbindungen mit mindestens zwei elektrophilen Gruppen X oder die hydrolysierbaren Silanverbindungen mit der nukleophilen Gruppe Y können ganz oder teilweise durch organische Verbindungen mit mindestens zwei elektrophilen Gruppen Y ersetzt werden. Bei den in den organischen Verbindungen vorhandenen Gruppen X oder Y handelt es sich dabei um diesselben Gruppen, die vorstehend bei den entsprechenden hydrolysierbaren Silanverbindungen genannt wurden. Es können nicht beide hydrolysierbaren Silanverbindungen vollständig durch entsprechende organische Verbindungen ersetzt werden.

Sofem eine organische Verbindung eingesetzt wird, sind die darin vorhandenen elektrophilen oder nukleophilen Gruppen bei der Einstellung des bevorzugten Stoffmengenverhältnis zwischen Komponente a) und Komponente b) zu berücksichtigen, d. h. in diesem Fall bezieht sich das bevorzugte Molverhältnis von Komponente a) zu b) auf Stoffmenge an vorhandener elektrophiler Gruppe X zu Stoffrnenge an nukleophiler Gruppe Y.

Bei den genannten organischen Verbindungen kann es sich um organische Monomere, Oligomere oder Polymere handeln, die mindestens zwei elektrophile oder nukleophile Gruppen enthalten, oder Mischungen davon handeln. Es können alle nach dem Stand der Technik bekannten und für diese Zwecke geeigneten Verbindungen eingesetzt werden. Es handelt sich z. B. um aliphatische, cycloaliphatische oder aromatische Verbindungen.

Konkrete Beispiele für organische Verbindungen mit mindestens zwei Epoxidgruppen sind 3,4-Epoxycyclohexylmethyl-3,4-epoxycyclohexancarboxylat, Bis-(3,4-epoxycyclohexyl)adipat,1,4-Butandiolglycidether, Cyclohexandimethanoldiglycidether, Glycerintriglycidether, Neopentylglycoldiglycidether, Pentaerythritpolyglycidether, 2-Ethyl-Hexylglycidether, 1,6-Hexandioldiglycidether, Propylenglycoldiglycidether, Polypropylenglycoldiglycidether, Bisphenol-A-diglycidether, Bisphenol-F-diglycidether. Epoxidharze auf der Basis von Bisphenol-A, Epoxidharze auf Basis von Bisphenol-F und Epoxidharze auf Basis von Bisphenol-A/F.

Konkrete Beispiele für organische Verbindungen mit mindestens zwei Epoxidgruppen sind 1,3-Diaminopentan, 1,5-Diamino-2-methylpentan, 1,4-Diaminocyclohexan, 1,6-Diaminohexan, Diethylendiamin, Triethylentetramin oder Isophorondiamin. Konkrete Beispiele für organische Verbindungen mit mindestens zwei Säurechloridgruppen sind Malonsäuredichlorid, Bernsteinsäurechlorid und Adipinsäuredichlorid. Selbstverständlich können auch organische Verbindungen eingesetzt werden, die verschieden elektrophile oder verschiedene nukleophile Gruppen tragen.

Weiter enthält die in dem erfindungsgemäßen Verfahren verwendete Beschichtungszusammensetzung mindestens ein hydrolysierbares Silan (c) mit mindestens einer nicht hydrolysierbaren kohlenstoffhaltigen Gruppe, die durchschnittlich 2 bis 30 Fluoratome aufweist, die an ein oder mehrere aliphatische Kohlenstoffatome gebunden sind, welche durch mindestens zwei Atome von dem Siliciumatom getrennt sind. Diese Silane werden nachstehend zur Vereinfachung auch mit Fluorsilane bezeichnet.

Die Anzahl und Art der hydrolysierbaren Gruppen und der nicht hydrolysierbaren Gruppen für die hydrolysierbaren Silane mit einer fluorierten Gruppe entsprechen, abgesehen von der nicht hydrolysierbaren fluorierten Gruppe, der Anzahl und Art nach denen, die vorstehend für die hydrolysierbaren Gruppen mit einer elektrophilen oder nukleophilen Gruppe angegeben sind. Insofern kann sinngemäß auf die vorstehenden Erläuterungen verwiesen werden. Konkrete Beispiele für erfindungsgemäß einsetzbare Fluorsilane können der EP 0 587 667entnommen werden, worauf hiermit Bezug genommen wird.

Die nicht hydrolysierbare Gruppe mit F-Substituenten R"' im Fluorsilan enthält im Durchschnitt 2 bis 30, bevorzugt 5 bis 30 Fluoratome, welche an ein oder mehrere aliphatische (einschließlich cycloaliphatische) Kohlenstoffatome gebunden sind, die durch mindestens zwei Atome von dem Silicium getrennt sind. Vorzugsweise enthalten die Gruppen R"' im Durchschnitt 5 bis 25 und insbesondere 8 bis 18 Fluoratome, die an aliphatische Kohlenstoffatome gebunden sind, wobei diejenigen Fluoratome nicht berücksichtigt sind, die gegebenenfalls in anderer Weise, zB. an aromatische Kohlenstoffatome, gebunden sind (z.B. im Falle von C₆F₄). Bei der fluorhaltigen Gruppe R"' kann es sich auch um einen Chelatliganden handeln. Ebenso ist es möglich, daß sich ein oder mehrere Fluoratome an einem Kohlenstoffatom befinden, von dem eine Doppel- oder Dreifachbindung ausgeht. Da die Gruppe R"' nur im Durchschnitt 2 entsprechende Fluoratome aufweisen müssen, können auch Gruppen R"' eingesetzt werden, die über nur 1 Fluoratom verfügen, wenn gleichzeitig genügend Gruppen R"' vorhanden sind, die mehr als 2 Fluoratome aufweisen.

Bevorzugte Silane mit einer fluorierten Gruppe sind solche der allgemeinen Formel (III):

Z₃SiR"' (III)

worin die Reste Z wie im Falle der allgemeinen Formel (l) oben definiert sind, und R"' z.B. eine wie vorstehend definierte Gruppe oder eine nachstehend aufgeführte Gruppe ist.

Konkrete Beispiele für Fluorsilane sind C₂F₅-CH₂CH₂-SiZ₃, n-C₆F₁₃-CH₂CH₂-SiZ₃, n-C₈F₁₇-CH₂CH₂-SiZ₃, n-C₁₀F₂₁-CH₂CH₂-SiZ₃ mit (Z = OCH₃, OC₂H₅ oder Cl); i-C₃F₇O-CH₂CH₂CH₂-SiCl₂(CH₃), n-C₆F₁₃-CH₂CH₂-SiCl₂(CH₃) und n-C₆F₁₃-CH₂CH₂-SiCl(CH₃)₂.

Das Fluorsilan (c) wird z. B. in einer Menge von 0,005 bis 0,05 Mol bezogen auf 1 Mol der Komponente (a) eingesetzt. Bevorzugt sind Mengen im Bereich von 0,005 bis 0,03 und insbesondere von 0,008 bis 0,02 Mol, bezogen auf 1 Mol der Komponente (a).

Bei den nanoskaligen Feststoffteilchen (d) handelt es sich um Teilchen mit einer mittleren Teilchengröße (einem mittleren Teilchendurchmesser) von nicht mehr als 1000 nm, bevorzugt nicht mehr als 200 nm, bevorzugter nicht mehr als 100 nm, und insbesondere nicht mehr als 70 nm. Besonders bevorzugte Teilchengröße liegen im Bereich von 1 bis 100 nm, vorzugsweise 2 bis 50 nm und besonders bevorzugt 5 bis 40 nm.

Die nanoskaligen (anorganischen) Feststoffteilchen können aus beliebigen Materialien bestehen, vorzugsweise bestehen sie jedoch aus Metalten und insbesondere aus Metallverbindungen wie beispielsweise (gegebenenfalls hydratisierten) Oxiden wie ZnO, CdO, SiO₂, TiO₂, ZrO₂, CeO₂, SnO_{z}, Al₂O₃, in₂O₃, La₂O₃, Fe₂O₃, CU₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCI, AgBr, Agl, CuCI, CuBr, Cdl₂ und Pbl₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. Indium-Zinn-Oxiden (ITO) und solchen mit Perowskitstruktur wie BaTiO₃ und PbTiO₃).

Bevorzugt handelt es sich bei den eingesetzten nanoskaligen anorganischen Feststoffteilchen um ein Oxid oder Oxidhydrat von Si, Al sowie von Übergangsmetallen, vorzugsweise Ti, Zr und Ce, und Mischungen davon. Beispiele hierfür sind nanoskalige Teilchen von SiO₂, TiO₂, ZrO₂, ZnO, SnO₂ und Al₂O₃ (in allen Modifikationen, insbesondere als Böhmit, AIO(OH)) sowie Mischungen derselben. Besonders bevorzugt werden nanoskalige SiO₂-Teilchen verwendet. Hierfür können zB. auch handelsübliche Kieselsäureprodukte, z.B. Kieselsole, wie die Levasile®, Kieselsole der Bayer AG, oder pyrogene Kieselsäuren, z.B. die Aerosil-Produkte von Degussa, verwendet werden. Die teilchenförmigen Materialien sind in Form von Pulvern und Solen im Handel erhältlich.

Die nanoskaligen Feststoffteilchen können in dieser Form oder in Form von oberflächenmodifizierten Teilchen eingesetzt werden. Die Herstellung von mit organischen Oberflächengruppen versehenen nanoskaligen anorganischen Feststoffteilchen kann prinzipiell auf zwei verschiedenen Wegen durchgeführt werden, nämlich zum einen durch OberFlächenmodifizierung von bereits hergestellten nanoskaligen anorganischen Feststoffteilchen und zum anderen durch Herstellung dieser anorganischen nanoskaligen Feststoffteilchen unter Verwendung von einer oder mehreren Verbindungen, die für die Oberflächenmodifizierung geeignet sind.

Wird eine Oberflächenmodifizierung bereits hergestellter nanoskaliger Teilchen durchgeführt, eignen sich zu diesem Zweck alle (vorzugsweise niedermolekularen) Verbindungen, die über eine oder mehrere Gruppen verfügen, die mit auf der Oberfläche der nanoskaligen Feststoffteilchen vorhandenen (funktionellen) Gruppen (wie beispielsweise OH-Gruppen im Falle von Oxiden) reagieren oder zumindest wechselwirken können. Somit können die entsprechenden Verbindungen z.B. sowohl kovalente als auch ionische (salzartige) oder koordinative (Komplex)-Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen wären. Bevorzugt wird die Ausbildung von kovalenten und/oder koordinativen Bindungen. Konkrete Beispiele für zur Oberflächenmodifizierung der nanoskaligen anorganischen Feststoffteilchen heranziehbare organische Verbindungen sind beispielsweise Carbonsäuren, β-Dicarbonyl-Verbindungen (z.B. β-Diketone oder β-Carbonylcarbonsäuren), Alkohole, Amine, Epoxide und dergleichen.

Erfindungsgemäß besonders bevorzugt wird- insbesondere im Fall von oxidischen Teilchen - die Oberflächenmodifizierung mit hydrolytisch kondensierbaren Silanen mit mindestens (und vorzugsweise) einem nicht hydrolysierbaren Rest durchgeführt. Hierfür eignen sich z.B. die vorstehend genannten hydrolysierbaren Silane der Komponenten a) bis c). Werden zum Beispiel zumindest ein Teil der hydrolysierbaren Silane der Komponenten a) und/oder b) zur Oberflächenmodifizierung der nanoskaligen anorganischen Feststoffteilchen verwendet, und werden diese oberflächenmodifizierten Teilchen für die Beschichtungszusammensetzung verwendet, so ergeben sich ausgesprochen vorteilhafte Überzüge (Kratzfestigkeit). Anderseits können auch die Fluorsilane zur Oberflächenmodifizierung verwendet werden. Durch Verwendung derart oberflächenmodifizierter Feststoffteilchen in der Beschichtungszusammensetzung lassen sich Überzüge mit Fluor-Konzentrationsgradienten erzeugen.

Erfolgt bereits die Herstellung der nanoskaligen anorganischen Feststoffteilchen unter Verwendung einer oder mehrerer Verbindungen, die über polymerisierbare/potykondensierbare Gruppen verfügen, kann von einer nachträglichen Oberflächenmodifizierung abgesehen werden (obwohl diese selbstverständlich als zusätzliche Maßnahme möglich ist).

Die Variation der nanoskaligen Teilchen geht in der Regel mit einer Variation des Brechwerts und der Chemikalienbeständigkeit der entsprechenden Materialien einher. So führt der vollständige oder teilweise Ersatz von Si0₂-Teilchen durch ZrO₂ bzw. TiO₂ Teilchen zu Materialien mit höheren Brechwerten, wobei sich der Brechwert nach der Lorentz-Lorentz-Gleichung additiv aus dem Volumen der einzelnen Komponenten ergibt. Der vollständige oder teilweise Ersatz von SiO₂-Teilchen durch Böhmit-, ZrO₂- bzw. TiO₂Teilchen führt zu Materialien mit hoher Alkalibeständigkeit.

Das nanoskaligen anorganischen Feststoffteilchen werde in der Beschichtungszusammensetzung z. B. in einer Menge von 0,20 bis 2,00 Mol bezogen auf 1 Mol der Komponente (a) eingesetzt. Bevorzugt sind Mengen im Bereich von 0,7 bis 1,7 und insbesondere von 1,0 bis 1,4 Mol, bezogen auf 1 Mol der Komponente (a).

Es können zusätzlich weitere hydrolysierbare Verbindungen (e) von Elementen aus der Gruppe Si, Ti, Zr, Al, B, Sn, und V zu der Beschichtungszusammensetzung zugegeben werden. Diese werden vorzugsweise mit den hydrolysierbaren Silanverbindungen der Komponente a) hydrolysiert. Bei der Verbindung (e) handelt es sich um eine Verbindung von Si, Ti, Zr, Al, B, Sn, und V der allgemeinen Formel RₓM⁴R'₄₋ₓ oder RₓM³⁺R'₃₋ₓ wobei M a) Si⁴⁺, Ti⁴⁺, Zr⁴⁺, Sn⁴⁺ oder b) Al³⁺, B³⁺ oder (VO)³⁺darstellt, R einen hydrolysierbaren Rest darstellt, R' einen nicht hydrolysierbaren Rest darstellt und x im Fall vierwertiger Metallatome (Fall a) 1 bis 4 und im Fall dreiwertiger Metallatome (Fall b) 1 bis 3 sein kann. Falls mehrere Reste R und/oder R' in einer Verbindung (e) anwesend sind, dann können diese jeweils gleich oder verschieden sein. Bevorzugt ist x größer als 1, d.h. die Verbindung (e) weist mindestens einen, bevorzugt mehrere hydrolysierbare Reste auf.

Beispiele für die hydrolysierbaren Reste sind Halogen (F, Cl, Br und l, insbesondere Cl und Br), Alkoxy (insbesondere C₁₋₄Alkoxy, wie z.B. Methoxy, Ethoxy, n-Propoxy, i-Propoxy, n-Butoxy, i-Butoxy, sec-Butoxy oder tert-Butoxy), Acyloxy (insbesondere C₁₋₄-Acyloxy, wie z.B. Acetoxy und Propionyloxy). Besonders bevorzugte hydrolysierbare Reste sind Alkoxygruppen, insbesondere Methoxy und Ethoxy.

Beispiele für nicht hydrolysierbare Reste sind Alkylgruppen, (insbesondere C₁₋₄-Alkyl wie z.B. Methyl, Ethyl, Propyl und Butyl), wobei die diese gegebenenfalls einen oder mehreren Substituenten wie z.B. Halogen und Alkoxy aufweisen können. Auch Methacryl- und Methacryloxypropylreste können in diesem Zusammenhang verwendet werden. Wie ersichtlich können diese Verbindungen (e) (insbesondere die Siliciumverbindungen) auch über nicht hydrolysierbare Reste verfügen, die eine C-C-Doppel- oder -Dreifachbindung aufweisen.

Weiter kann die erfindungsgemäß verwendeten Beschichtungszusammensetzung in übliche Additive enthalten, wie z.B. Lösungsmittel, gelöste Farbstoffe, Farbpigmente, Verlaufsmittel, Rheologieadditive, UV-Stabilisatoren und Polymerisationskatalysatoren.

Zur Einstellung eines einfachen Mischungsverhältnisses und zur Einstellung der rheologischen Eigenschaften der Komponenten können gegebenfalls inerte Lösungsmittel nach der Abdestillation niedriger Alkohole zugesetzt werden. Vorzugsweise handelt es sich bei diesen Lösungsmitteln um bei Raumtemperatur flüssige Alkohole und Glycolether. Besonders bevorzugte Lösungsmittel sind C₁₋₈-Alkohole, insbesondere 1-Butanol als Niedrigsieder, und C₁₋₆-Glycolether, insbesondere 1-Butoxyethanol als Hochsieder.

Das Auftragen auf das Substrat erfolgt durch Standard-Beschichtungsverfahren wie z.B. Tauchen, Streichen, Bürsten, Rakeln, Walzen, Sprühen, Fallfilmauftrag und Schleudern (Spincoating). Vorzugsweise werden 10 bis 100 µm, bevorzugt 20 bis 70 um und insbesondere 30 bis 50 µm Naßfilm aufgetragen. Die Schichtdicke der vernetzten Schicht sollte 0,5 bis 50 µm, bevorzugt 1 bis 20 µm und insbesondere 2 bis 10 µm betragen. Im allgemeinen erfolgt die Selbstvernetzung bei 20 °C Umgebungstemperatur innerhalb von 3 h bis zum Trockengrad 5 und innerhalb 48 h bis zum Trockengrad 6. Falls gewünscht kann natürlich durch eine erhöhte Temperatur eine schnellere Trocknung erreicht werden.

Die Auswahl der Substratmaterialien zur Beschichtung ist nicht beschränkt. Vorzugsweise eignen sich die Beschichtungszusammensetzungen zum Beschichten von Holz, Textilien, Papier, Steinwaren, Metallen, Glas, Keramik, Kunststoffen und alkoholbeständigen organischen Lacken, Farben und Putz. Ganz besonders eignen sich die Zusammensetzungen zur Beschichtung von lackierten Substraten, insbesondere von Substraten mit 2K-PUR-Decklack, Metallen oder lackierten Metalloberflächen und natürlichen oder künstlichen Steinen. Insbesondere Karosseriedecklacke, Gebäudefassaden und Fassadenelemente können mit dem erfindungsgemäß erhaltenen Beschichtungsusammensetzungen beschichtet werden. Weitere Anwendungsgebiete sind medizinische Geräte, Medizintechnik (Zahnmaterial), Außenhäute von Fahrzeugen (auch Wirdschutzscheiben und Spiegel), Flugzeugen, Motoren und Propellern, Geräte zur Lebensmittelherstellung, Milchproduktion und Verarbeitung und Rohre.

Die erfindungsgemäß beschichteten Gegenstände erhalten eine permanente antiadhäsive Oberfläche und darauf aufgebrachte Graffiti oder mit Kleister angeklebte Plakate können leicht und einfach entfernt werden. Es hat sich gezeigt, daß mit der erfindungsgemäßen Beschichtungszusammensetzung, insbesondere bei Einhaltung der vorstehend genannten bevorzugten Verhältnisse zwischen den Komponenten, Überzüge mit guter Haftung, Abrieb- und Kratzfestigkeit, sowie wasser-, öl- und lackabweisende Eigenschaften erhalten werden. Die selbstvernetzenden Schichten sind farblos transparent, kratzfest und besitzen eine Oberflächenenergie unter 20 mJ/m².

Die Beschichtungszusammensetzung kann insbesondere durch ein Verfahren erhalten, bei dem zunächst zwei getrennte, lagerfähige Komponenten (A) und (B) hergestellt werden, die dann durch Mischen die beschichtungsfertige Beschichtungszusammensetzung ergeben. Zur einfachen Handhabung können die Gehalte beider Komponenten mit einem oder mehreren Lösungsmitteln so eingestellt werden, daß beim Mischen einfache (geradzahlige) Massenverhältnisse wie z.B. 3 Teile (a) zu 1 Teil (b) erhalten werden. Die Topfzeit der vermischten Komponenten (A) und (B) wird durch Art und Verhältnis der hydrolysierbaren Silanverbindungen der Komponenten a) und b) und der verwendeten Lösungsmittelmenge bestimmt und beträgt bevorzugt 1,5 bis 5 h.

Die hydrolysierbaren Silane der Komponenten a) bis c) können als Monomere oder teilweise kondensiert eingesetzt werden. In einer bevorzugten Ausführungsform wird eine der Komponenten a) oder b), bevorzugt die Komponente a), mit dem Fluorsilan in cokondensierter Form eingesetzt. In einer bevorzugten Ausführungsform umfaßt die Komponente (A) des Zweikomponenten-Beschichtungssystem ein solches Cokondensat. Hierfür wird das Fluorsilan bevorzugt zum Vorhydrolysat der Siliciumverbindung der Komponente a) zugegeben und cohydrolysiert. Bei diesem Vorgehen werden Überzüge mit starker Anreicherung des Fluorsilans an der Schichtoberfläche erhalten (starker Fluorgradient). Zur Einstellung eines geringeren Fluorgradienten kann das Fluorsilan auch getrennt oder zusammen den hydrolysierbaren Verbindungen (e) oder 10 Gew.% des teilchenförmigen Materials (d) vorhydrolysiert werden und anschliessend zum Vorhydrolysat der Siliciumverbindung (a) gegeben werden. Bei begrenzter Löslichkeit des Fluorsilans im Vorhydrolysat der Komponente a) können als Lösungsvermittler Alkohole zugegeben werden. Die Reaktionsmischung wird bei Raumtemperatur intensiv gerührt, bis das zugegebene Fluorsilan hydrolysiert ist.

Die folgenden Beispiele erläutern die Erfindung.

### Beispiel 1

### Herstellung der Komponente (A)

Eine Silanverbindung (Komponente a) wird gegebenenfalls unter Verwendung eines sauren Katalysators bevorzugt bei Raumtemperatur in wäßriger Lösung vorhydrolysiert, wobei vorzugsweise etwa 2.5 Mol Wasser pro Mol hydrolysierbarer Gruppe eingesetzt wird. Unter Raumtemperatur wird 20 bis 23 °C verstanden. Als Katalysator für die Vorhydrolyse wird bevorzugt 0,1 n Salzsäure eingesetzt. Die Hydrolyse wird im allgemeinen solange geführt bis etwa ein Drittel der mit der Salzsäure eingebrachten Wassermenge aufgebraucht wurde. Der Restwassergehalt während der Hydrolyse kann mit Karl-Fischer-Titration verfolgt werden.

Typische Werte bei 2,5 Mol GPTS als Silanverbindung der Komponente a) sind 4 h Reaktionsdauer, ein Restwassergehalt von 25 Gew.% (Anfangswert 36 Gew.%) und der typische Si-Kondensationsgrad laut ²⁹Si-NMR beträgt 25 bis 30 % (25 bis 28% T⁰, 60 bis 65% T¹ und 8 bis 11 % T² Si-Spezies). Es findet unter diesen Bedingungen keine Epoxid-Ringöffnung zum Glycol statt (¹³C-NMR).

Eine Fluorsilankomponente kann zur Cokondensation hinzugegeben werden. Bei einem 1 Mol GPTS Vorhydrolysat und 0.009 Mol 1 H,1 H,2H,2H-Perfluoroctyltriethoxysilan als Fluorsilan sind geeignete Bedingungen 4 h Reaktionsdauer bei einer Zugabe von 130 g Methanol pro g (B) als Lösungsvermittler. Weitere typische Werte sind ein Restwassergehalt von 9 Gew.% und der typische Si-Kondensationsgrad laut ²⁹Si-NMR beträgt 34 bis 38 % (10 bis 15% T⁰, 62 bis 67% T¹ und 20 bis 24% T² Si-Spezies). Die Oberflächenspannung des Sols beträgt 25 bis 27 mN/m bei 25°C (gemessen nach der Wilhelmy Methode).

Bei der Hydrolyse entstandene niedere Alkohole und gegebenenfalls zugesetzte Lösungsvermittler werden durch eine anschliessende Vakuumdestillation entfernt, wobei der Kondensationsgrad soweit erhöht wird, bis die Rohkomponente (A) nahezu frei von unkondensierten Si-Spezies ist. Wenn bei der Desillation ein Azeotrop abdestilliert wurde, ist es bevorzugt, die durch die Destillation entfernte Wassermenge wieder zu ergänzen. Typische Werte aus obigem Beispiel bei einer Vakuumdestillation mit 40 °C Badtemperatur und 75 mbar Enddruck sind 22 bis 29 Gew.% Ausbeute an Rohkondensat (a) mit einem Restwassergehalt von 12 bis 14 Gew.% und einem Si-Kondensationsgrad von 60 bis 64% (0 bis 2% T⁰, 26 bis 32% T¹, 52 bis 66% T² und 11 bis 19% T³ Si-Spezies). Zur Ergänzung der Wassermenge sind typischerweise 0,25 bis 0,30 g Wasser pro g Destillationsrückstand notwendig.

### Herstellung der Komponente (B)

Eine Silanverbindung (Komponente b) wird mit nanoskaligen anorganischen Feststoffteilchen d) gemischt und durch thermische Behandlung auf der Oberfläche des teilchenförmigen Materials kondensiert (Oberflächenmodifikation). Bevorzugt wird dazu die Silanverbindung b) unter Wasserausschluß und intensivem Rühren erwärmt und das teilchenförmige Material d) wird in Form eines alkoholischen Sols mit ca. 30 Gew.% Feststoffanteil zugetropft. Alkoholische Sole sind z. B. von Fa. Nissan Chemical Industries, Ltd. als SiO₂ in Methanol oder SiO₂ in i-Propanol direkt erhältlich. Die Mischung wird 24 h unter Rückfluß des verwendeten Alkohols erhitzt. Es wird eine farblose, transluzente Suspension erhalten.

Typische Werte bei Verwendung von 0.4 Mol APTS und 1,2 Mol SiO₂ in i-Propanol sind ein Wassergehalt kleiner 1 Gew.% und ein Si-Kondensationsgrad von 12 bis 20% (50 bis 54% T⁰, 39 bis 43% T¹, 5 bis 9% T²). Bei der Oberflächenmodifizierung entstandene niedere Alkohol und der Alkohol aus der Suspension wird durch eine anschliessende Vakuumdestillation entfernt und kann wiederverwendet werden. Typische Werte aus obigem Beispiel bei einer Vakuumdestillation mit 40 °C Badtemperatur und 40 mbar Enddruck sind 50 bis 54 Gew.% Ausbeute an oberflächenmodfiziertem SiO₂ (b) mit einem Restwassergehalt kleiner 1 Gew.% und einem Si-Kondensationsgrad von 20 bis 44% (41 bis 45% T⁰, 45 bis 49% T¹, 8 bis 12% T²).

Typischerweise werden für eine Anwendung als Sprühbeschichtung pro g Komponente (a) 1,7 g Lösungsmittel und pro g Komponente (b) 0,9 g Lösungsmittel zugeben, so daß ein Mischungsverhältnis von 3 Gewichtsteilen Komponente (a) zu 1 Gewichtsteil Komponente (b) resultiert.

### Beispiel 2

### Herstellung der Komponente (A)

1147,5 g (4.855 Mol) GPTS wurden mit 654,3 g (36.35 Mol) 0.1n Salzsäure in einem 5 1 Reaktor bei 20 °C unter Rühren hydrolysiert. Nach 4 h wurde zu dem GPTS-Hydrolysat 22,8554 g (0,0448 Mol, 0.92 Mol% bzgl. GPTS) 1H,1H,2H,2H-Perfluoroocytyltriethoxysilan (FTS) und 3000 g Methanol gegeben, bis eine klare Lösung resultierte. Die homogene Reaktionsmischung wurde vor der Weiterverarbeitung 4 h gerührt. Aus 3387,13 g der Reaktionsmischung wurde am Rotationsverdampfer bei 40 °C Wasserbadtemperatur bis zu einem Druck von 75 mbar abdestilliert. Begonnen wurde die Destillation mit einem Druck von pₐ = 140 mbar, der alle 1 h um 20 mbar gesenkt wurde. Man erhielt 900,57 g eines stark viskosen Rückstands (Rohkomponente (A)). Aus den Wassergehalten vor und nach der Destillation (10,97 Gew% und 12,95 Gew.%) wurde berechnet, daß 255,12 g Wasser als Azeotrop abdestilliert wurden. 255,12 g destilliertes Wasser wurden unter Rühren zugegeben. Bei Raumtemperatur wurden zu 109.28 g Produkt unter Rühren 190,81 g Butylglycol gegeben.

### Synthese der Komponente (B)

1160.68g (6.474 Mol) 3-Aminopropyltrimethoxysilan APTS wurden im 61 Reaktor unter Feuchtigkeitsausschluß und Rühren mit einem KPG-Rührwerk auf 80 °C erhitzt. Zu dem erhitzten APTS wurde 3861.00 g einer 30 Gew.% SiO₂-Suspension in iso-Propanol aus einem Tropftrichter unter intensivem Rühren innerhalb 1 h langsam zutropft. Die Temperatur wurde nach der Zugabe für 24 h auf 80°C gehalten.

Die farblose, transluzente Reaktionsmischung wurde am Rotationsverdampfer bei 40 °C Wasserbadtemperatur bis zu einem Druck von 40 mbar abdestilliert. Begonnen wurde die Destillation mit einem Druck von pₐ = 130 mbar, der alle 1 h um 15 mbar gesenkt wurde. Bei Raumtemperatur wurden zu 2611,3 g Destillationsrückstand unter Rühren 35,7 g Butylglycol und 1911,1 g 1-Butanol gegeben.

### Mischung und Verarbeitung von Komponente (A) und (B)

Zu 300 g der Komponente (A) wurden unter Rühren 100 g der Komponente B gegeben. Diese Mischung besaß eine Topfzeit größer 2 h. Die Mischung wurde mit einer Fließbechersprühpistole mit 1,4 mm Düse und 4 bar Luftdruck auf Aluminiumplatten, mit weissem 2K-Polyurethanlack (2K-PUR-Lack, Fa. ICI Autocolor Turbo Plus Decklack) lackierte Stahlbleche, Marmorptatten und Terrakottakacheln in 25 bis 50 µm Naßfilmdicke aufgesprüht. Die Ablüftzeit (flush-off time) betrug 30 min und nach 3 h Lagerung bei 20 °C wurde Trockengrad 5 erreicht. Nach 48 h Lagerung bei 20 °C betrug der Trockengrad 6. Die Trockenschichtdicke betrug 5 bis 10 µm.

Die beschichteten Substrate wurden den folgenden Prüfungen unterzogen:
Gitterschnittprüfung: EN ISO 2409:1994
Das Beschichtungsmaterial aus Beispiel 2 auf dem Substrat Stahlblech mit 2K-PUR-Decklack besaß einen Gitterschnittwert von 0 und einen Tapetestwert von 1. Auf der Aluminiumplatte wurde für das Beschichtungsmaterial aus Beispiel 2 ein Gitterschnittwert von 0 und ein Tapetest von 0 bestimmt.
Benetzungseigenschaften
Die Oberflächenenergie des Beschichtungsmaterials aus Beispiel 2 wurde mit Testtinten (Fa. Arcotec; Fa Tigres) bestimmt und betrug weniger als 20 mJ/m². Die Fortschreitkontaktwinkel gegen Wasser und Hexadecan wurden nach der Tropfenmethode bestimmt und betrugen 100 ° bei Wasser und 48 ° bei Hexadecan. Taber-Abraser-Test: Verschleißprüfung DIN 52347 (1000 Zyklen, CS10F, 500 g) Der Substrat "Stahlblech mit 2K-PUR-Decklack" besaß einen Abrieb von 2.4 mg/100 Zyklen. Das Beschichtungsmaterial aus Beispiel 2 auf dem Substrat Stahlblech mit 2K-PUR-Decklack besaß einen Abrieb von 0.4 mg/100 Zyklen.
Ritzhärte-Prüfung
Die Ritzhärte (Auflagemasse auf eine Vickersdiamanten, der auf der zu prüfenden Schicht bewegt wird, bis zur Erzeugung einer bei 40-facher Vergrößerung sichtbaren Kratzspur) betrug beim Substrat "Stahlblech mit 2K-PUR-Decklack" < 1 g und beim Beschichtungsmaterial aus Beispiel 2 auf dem Substrat Stahlblech mit 2K-PUR-Decklack 4 g. In einem empirischen Scheuertest mit Stahlwolle Typ 00 wurde das Beschichtungsmaterial aus Beispiel 2 auf dem Substrat Stahlblech mit 2K-PUR-Decklack im Gegensatz zum Substrat "Stahlblech mit 2K-PUR-Decklack" nicht sichtbar verkratzt.
Filzstift-Test
Mit Fasermalern (Fa. Edding Typ 3000 schwarz, Fa. Herlitz Typ rot) wurden 1 x 1 cm² Felder auf die Substrate "Stahlblech mit 2K-PUR-Decklack" und "Beschichtungsmaterial aus Beispiel 2 auf Stahlblech mit 2K-PUR-Decklack" aufgebracht und 2 h bei 20 °C getrocknet. Anschliessend wurde das Feld mit einem Papiertuch abgewischt, das mit i-Propanol getränkt war. Die Spuren der Fasermaler wurden vom "Beschichtungsmaterial aus Beispiel 2 auf Stahlblech mit 2K-PUR-Decklack" optisch vollständig entfernt, während bei dem Substrat "Stahlblech mit 2K-PUR-Decklack" durch eindiffundierenden Farbstoff blaue (Edding 3000) bzw. rote (Herlitz rot) Schatten zurückblieben.
Graffiti-Test
Als Graffitilacke wurden lösungsmittelbasierte Sprühlacke auf Alkydharzbasis (Fa. Schell) verwendet. Die Sprühlacke wurden deckend auf die Substrate aufgebracht, 8 h abgelüftet und anschliessend 48 h bei 50 °C eingebrannt. Zur Reinigung wurde ein Hochdruckreiniger (Fa. Kärcher) mit Kaltwasser und kommerzielle Graffitireiniger (Spray-out, Fa. Ell) und Lösungsmittel (i-Propanol, Aceton) in Kombination mit Putzlappen eingesetzt. Die Beurteilung erfolgte durch Versuchspersonen.
Die Ergebnisse sind in folgender Tabelle zusammengefasst:

| | Aluminiumplatte | Stahlblech mit 2K-PUR Decklack | Terrakottakachel |
|---|---|---|---|
| Substrate ohne Beschichtung nach Beispiel 2 | ● keine Reinigung mit Hochdruckreiniger ● einfache Reinigung mit Graffitireiniger | ● keine Reinigung mit Hochdruckreiniger ● schwierige Reinigung mit Graffitireiniger ● Sichtbar starke Glanzabnahme in 10 Reinigungszyklen | ● keine Reinigung mit Hochdruckreiniger ● schwierige Reinigung mit Graffitireiniger ● Reste von Graffitilack bleiben in Vertiefungen |
| Substrate mit Beschichtung nach Beispiel 2 | ●gute Reinigung mit Hochdruckreiniger ● sehr einfache Reinigung mit Graffitireiniger | ●gute Reinigung mit Hochdruckreiniger ● einfache Reinigung mit Graffitireiniger ● Keine sichtbare Glanzabnahme in 10 Reinigungszyklen | ● sehr gute Reinigung mit Hochdruckreiniger ● einfache Reinigung mit Graffitireiniger ● Vollständige Reinigung während 10 Zyklen möglich |

Plakat-Test
Auf die Marmorplatte und die mit Beschichtung aus Beispiel 3 versehene Marmorplatte wurde ein nach Herstelleranweisung hergestellter Kleister (Metylan Spezial (Kleister auf der Basis von Methylcellulose mit Kunstharzzusatz), Fa. Henkel) aufgetragen und ein Papierplakat aufgeklebt. Die plakatierten Substrate wurden bei 20 °C 24 h lang getrocknet. Dann wurde versucht, die Plakat mechanisch von den Substraten zu lösen. Bei der unbeschichteten Marmorplatte konnten von Versuchspersonen kleine Teilstücke aus der Oberschicht des Plakates entfernt werden und es verblieben stark haftende Papierfetzen auf der Platte. Bei der beschichteten Marmorplatte löste sich Plakat nach der Trocknung an den Papierkanten teilweise abgelöst selbst ab und war gewellt. Versuchspersonen konnten das Plakat ausgehend von dem gewellten Teil einfach und vollständig entfernen. Der Versuch wurde dreimal auf der gleichen Stelle ohne Änderung des Versuchsergebnisses wiederholt.

## Patentansprüche

1. Verfahren zum Beschichten eines Substrats, bei dem man eine selbstvemetzende Beschichtungszusammensetzung auf Basis von
a) mindestens einem hydrolysierbaren Silan mit mindestens einem nicht hydrolysierbaren Substituenten, wobei das Silan an mindestens einem nicht hydrolysierbaren Substituenten eine oder mehrere elektrophile Gruppen X aufweist,
b) mindestens einem hydrolysierbaren Silan mit mindestens einem nicht hydrolysierbaren Substituenten, wobei das Silan an mindestens einem nicht hydrolysierbaren Substituenten eine oder mehrere nukleophile Gruppen Y aufweist, und
c) mindestens einem hydrolysierbaren Silan mit mindestens einer nicht hydrolysierbaren kohlenstoffhaltigen Gruppe, die durchschnittlich 2 bis 30 Fluoratome aufweist, die an ein oder mehrere aliphatische Kohlenstoffatome gebunden sind, welche durch mindestens zwei Atome von dem Siliciumatom getrennt sind,
wobei die Silane (a), (b) und/oder (c) gegebenenfalls vorkondensiert sind und wobei entweder die Silane (a) ganz oder teilweise durch organische Verbindungen mit mindestens zwei Gruppen X oder die Silane (b) ganz oder teilweise durch organische Verbindungen mit mindestens zwei Gruppen Y ersetzt werden können,
herstellt, auf ein Substrat aufträgt und bei Umgebungstemperatur (unter 40°C) unter Bildung eines Überzugs härten läßt.

2. Verfahren nach Anspruch 1, **dadurch gekennzeichnet, daß** in der Beschichtungszusammensetzung zusätzlich d) nanoskalige anorganische Feststoffteilchen verwendet werden, die gegebenenfalls oberflächenmodifiziert sind.

3. Verfahren nach Anspruch 1 oder 2, **dadurch gekennzeichnet, daß** die elektrophile Gruppe X eine Epoxid-, Anhydrid-, Säurehalogenid- oder Isocyanatgruppe ist.

4. Verfahren nach einem der Ansprüche 1 bis 3, **dadurch gekennzeichnet, daß** die nukleophile Gruppe Y eine Amino- oder Hydroxylgruppe ist.

5. Verfahren nach einem der Ansprüche 1 bis 4, **dadurch gekennzeichnet, daß** die Komponente a) und die Komponente c) in Form eines Copolykondensats in der Beschichtungszusammensetzung verwendet werden.

6. Verfahren nach einem der Ansprüche 2 bis 5, **dadurch gekennzeichnet, daß** als Komponente b) ein hydrolysierbares Aminosilan verwendet wird, wobei die nanoskaligen anorganischen Feststoffteilchen d) mit zumindest einem Teil des Aminosilans oberflächenmodifiziert sind.

7. Verfahren nach einem der Ansprüche 2 bis 5, **dadurch gekennzeichnet, daß** die nanoskaligen anorganischen Feststoffteilchen d) mit zumindest einem Teil des hydrolysierbaren Fluorsilans c) oberflächenmodifiziert sind.

8. Verfahren nach einem der vorhergehenden Ansprüche, **dadurch gekennzeichnet, daß** das Molverhältnis der Gruppen X:Y im Bereich von 5:1 bis 1:1 liegt.

9. Verfahren nach einem der vorhergehenden Ansprüche, **dadurch gekennzeichnet, daß** bezogen auf 1,0 Mol der Komponente a), 0,005 bis 0,05 Mol Fluorsilan c) und, falls vorhanden, 0,2 bis 2,0 Mol nanoskalige anorganische Feststoffteilchen d) in der Beschichtungszusammensetzung verwendet werden.

10. Beschichtetes Substrat, erhältlich nach einem Verfahren eines der Ansprüche 1 bis 9.

11. Selbstvemetzendes Zweikomponenten-Beschichtungssystem, **gekennzeichnet durch**
eine Komponente (A), umfassend mindestens ein, gegebenenfalls vorkondensiertes, hydrolysierbares Silan (a) mit mindestens einem nicht hydrolysierbaren Substituenten, wobei das Silan (a) an mindestens einem nicht hydrolysierbaren Substituenten eine oder mehrere elektrophile Gruppen X aufweist, und
eine Komponente (B), umfassend mindestens ein, gegebenenfalls vorkondensiertes, hydrolysierbaren Silan (b) mit mindestens einem nicht hydrolysierbaren Substituenten, wobei das Silan (b) an mindestens einem nicht hydrolysierbaren Substituenten eine oder mehrere nukleophile Gruppen Y aufweist,
wobei entweder die Silane (a) ganz oder teilweise **durch** organische Verbindungen mit mindestens zwei Gruppen X oder die Silane (b) ganz oder teilweise **durch** organische Verbindungen mit mindestens zwei Gruppen Y ersetzt werden können, und
wobei die Komponente A) undloder die Komponente B) zusätzlich ein hydrolysierbares Silan (c) mit mindestens einer nicht hydrolysierbaren kohlenstoffhaltigen Gruppe, die durchschnittlich 2 bis 30 Fluoratome aufweist, die an ein oder mehrere aliphatische Kohlenstoffatome gebunden sind, welche **durch** mindestens zwei Atome von dem Siliciumatom getrennt sind, beinhalten.

12. Selbstvernetzendes Zweikomponenten-Beschichtungssystem nach Anspruch 11, **dadurch gekennzeichnet, daß** in der Komponente A) und/oder der Komponente B) zusätzlich nanoskalige anorganische Feststoffteilchen (d) enthalten sind, die gegebenenfalls oberflächenmodifiziert sind.

13. Selbstvernetzendes Zweikomponenten-Beschichtungssystem nach Anspruch 11 oder 12, **dadurch gekennzeichnet, daß** die elektrophile Gruppe X eine Epoxid-, Anhydrid-, Säurehalogenid- oder Isocyanatgruppe ist.

14. Selbstvemetzendes Zweikomponenten-Beschichtungssystem nach einem der Ansprüche 11 bis 13, **dadurch gekennzeichnet, daß** die nukleophile Gruppe Y eine Amino- oder Hydroxylgruppe ist.

15. Selbstvernetzendes Zweikomponenten-Beschichtungssystem nach einem der Ansprüche 11 bis 14, **dadurch gekennzeichnet, daß** das Fluorsilan (c) in der vorkondensierten Komponente (A) cokondensiert ist.

16. Selbstvemetzendes Zweikomponenten-Beschichtungssystem nach einem der Ansprüche 12 bis 15, **dadurch gekennzeichnet, daß** die Komponente (B) ein hydrolysierbares Aminosilan und nanoskalige anorganische Feststoffteilchen (d) umfaßt, wobei die nanoskaligen anorganischen Feststoffteilchen mit zumindest einem Teil des Aminosilans oberflächenmodifiziert sind.

17. Selbstvernetzendes Zweikomponenten-Beschichtungssystem nach einem der Ansprüche 12 bis 15, **dadurch gekennzeichnet, daß** die Komponente (A) und/oder die Komponente (B) nanoskalige anorganische Feststoffteilchen (d) enthält, die mit zumindest einem Teil des hydrolysierbaren Fluorsilans (c) oberflächenmodifiziert sind.

## Claims

1. Method for coating a substrate by preparing a self-crosslinking coating composition based on
a) at least one hydrolysable silane containing at least one nonhydrolysable substituent, the silane containing one or more electrophilic groups X on at least one nonhydrolysable substituent,
b) at least one hydrolysable silane containing at least one nonhydrolysable substituent, the silane containing one or more nucleophilic groups Y on at least one nonhydrolysable substituent, and
c) at least one hydrolysable silane containing at least one nonhydrolysable carbonic group having on average from 2 to 30 fluorine atoms attached to one or more aliphatic carbon atoms separated by at least two atoms from the silicon atom,
the silanes (a), (b) and/or (c) having undergone prior condensation if desired and it being possible either for the silanes (a) to be replaced in whole or in part by organic compounds containing at least two groups X or for the silanes (b) to be replaced in whole or in part by organic compounds containing at least two groups Y,
applying it to a substrate and curing it at ambient temperature (below 40°C) to form a coating.

2. Method according to Claim 1, **characterized in that** additionally used in the coating composition are d) nanoscale inorganic particulate solids which optionally are surface modified.

3. Method according to Claim 1 or 2, **characterized in that** the electrophilic group X is an epoxy, anhydride, acid halide or isocyanate group.

4. Method according to any one of Claims 1 to 3, **characterized in that** the nucleophilic group Y is an amino or hydroxyl group.

5. Method according to any one of Claims 1 to 4, **characterized in that** component a) and component c) are used in the form of a copolycondensate in the coating composition.

6. Method according to any one of Claims 2 to 5, **characterized in that** a hydrolysable aminosilane is used as component b), the nanoscale inorganic particulate solids d) having been surface modified with at least part of the aminosilane.

7. Method according to any one of Claims 2 to 5, **characterized in that** the nanoscale inorganic particulate solids d) have been surface modified with at least part of the hydrolysable fluorosilane c).

8. Method according to any one of the preceding claims, **characterized in that** the molar ratio of the groups X:Y are in the range from 5:1 to 1:1.

9. Method according to any one of the preceding claims, **characterized in that** from 0.005 to 0.05 mol of fluorosilane c) and, where present, from 0.2 to 2.0 mol of nanoscale inorganic particulate solids d) per mole of component a) are used in the coating composition.

10. Coated substrate obtainable by a method of any one of Claims 1 to 9.

11. Self-crosslinking two-component coating system **characterized by**
a component (A) comprising at least one - optionally precondensed - hydrolysable silane (a) containing at least one nonhydrolysable substituent, the silane (a) having one or more electrophilic groups X on at least one nonhydrolysable substituent, and
a component (B) comprising at least one - optionally precondensed - hydrolysable silane (b) containing at least one nonhydrolysable substituent, the silane (b) containing one or more nucleophilic groups Y on at least one nonhydrolysable substituent,
it being possible either for the silanes (a) to be replaced in whole or in part by organic compounds containing at least two groups X or for the silanes (b) to be replaced in whole or in part by organic compounds containing at least two groups Y, and
component (A) and/or (B) further comprising a hydrolysable silane (c) containing at least one nonhydrolysable carbonic group having on average 2 to 30 fluorine atoms attached to one or more aliphatic carbon atoms separated by at least two atoms from the silicon atom.

12. Self-crosslinking two-component coating system according to Claim 11, **characterized in that** additionally used in component A) and/or component B) are nanoscale inorganic particulate solids (d) which optionally are surface modified.

13. Self-crosslinking two-component coating system according to Claim 11 or 12, **characterized in that** the electrophilic group X is an epoxy, anhydride, acid halide or isocyanate group.

14. Self-crosslinking two-component coating system according to any one of Claims 11 to 13, **characterized in that** the nucleophilic group Y is an amino or hydroxyl group.

15. Self-crosslinking two-component coating system according to any one of Claims 11 to 14, **characterized in that** the fluorosilane c) is cocondensed in the precondensed component (A).

16. Self-crosslinking two-component coating system according to any one of Claims 12 to 15, **characterized in that** component b) comprises a hydrolysable aminosilane and nanoscale inorganic particulate solids d), the nanoscale inorganic particulate solids having been surface modified with at least part of the aminosilane.

17. Self-crosslinking two-component coating system according to any one of Claims 12 to 15, **characterized in that** component (A) and/or component (B) comprise(s) nanoscale inorganic particulate solids d) which have been surface modified with at least part of the hydrolysable fluorosilane c).

## Revendications

1. Procédé de revêtement d'un substrat, dans lequel on prépare une composition de revêtement auto-réticulante à base
a) d'au moins un silane hydrolysable comportant au moins un substituant non-hydrolysable, le silane portant sur au moins un substituant non-hydrolysable un ou plusieurs groupes électrophiles X,
b) d'au moins un silane hydrolysable comportant au moins un substituant non-hydrolysable, le silane portant sur au moins un substituant non-hydrolysable un ou plusieurs groupes nucléophiles Y, et
c) d'au moins un silane hydrolysable comportant au moins un groupe carboné non-hydrolysable portant en moyenne de 2 à 30 atomes de fluor liés à un ou plusieurs atomes de carbone aliphatiques séparés par au moins deux atomes de l'atome de silicium,
les silanes (a), (b) et/ou (c) pouvant être précondensés et soit les silanes (a) pouvant être remplacés partiellement ou totalement par des composés organiques comportant au moins deux groupes X, soit les silanes (b) pouvant être remplacés partiellement ou totalement par des composés organiques comportant au moins deux groupes Y,
on applique cette composition sur un substrat et on laisse durcir à température ambiante (inférieure à 40 °C) de manière à former un revêtement.

2. Procédé selon la revendication 1, **caractérisé par le fait que** l'on utilise, dans la composition de revêtement, en outre (d) des nanoparticules solides minérales, ayant éventuellement fait l'objet d'une modification de surface.

3. Procédé selon la revendication 1 ou 2, **caractérisé par le fait que** le groupe électrophile X est un groupe époxy, anhydride, halogénure d'acide ou isocyanato.

4. Procédé selon l'une des revendications 1 à 3, **caractérisé par le fait que** le groupe nucléophile Y est un groupe amino ou hydroxyle.

5. Procédé selon l'une des revendications 1 à 4, **caractérisé par le fait que** le composant (a) et le composant (c) sont utilisés dans la composition de revêtement sous forme d'un copolycondensat.

6. Procédé selon l'une des revendications 2 à 5, **caractérisé par le fait que** l'on utilise, en tant que composant (b), un aminosilane hydrolysable, les nanoparticules solides minérales (d) étant modifiées en surface avec au moins une partie de cet aminosilane.

7. Procédé selon l'une des revendications 2 à 5, **caractérisé par le fait que** les nanoparticules solides minérales (d) sont modifiées en surface par au moins une partie du fluorosilane hydrolysable (c).

8. Procédé selon l'une des revendications précédentes, **caractérisé par le fait que** le rapport molaire des groupes X aux groupes Y est compris entre 5 : 1 et 1 : 1.

9. Procédé selon l'une des revendications précédentes, **caractérisé par le fait que** l'on utilise, dans la composition de revêtement, pour une mole de composant (a), de 0,005 à 0,05 mole de fluorosilane (c), et, le cas échéant, de 0,2 à 2,0 moles de nanoparticules solides minérales (d).

10. Substrat revêtu susceptible d'être obtenu par un procédé selon l'une des revendications 1 à 9.

11. Système de revêtement bicomposant auto-réticulant **caractérisé par le fait qu'**il contient
• un composant (A) contenant au moins un silane hydrolysable (a), éventuellement précondensé, comportant au moins un substituant non-hydrolysable, le silane (a) portant, sur au moins un substituant non-hydrolysable, un ou plusieurs groupes électrophiles X, et
• un composant (B) contenant au moins un silane hydrolysable (b), éventuellement précondensé, comportant au moins un substituant non-hydrolysable, le silane (b) portant, sur au moins un substituant non-hydrolysable, un ou plusieurs groupes nucléophiles Y,
les silanes (a) pouvant être remplacés en partie ou en totalité par des composés organiques comportant au moins deux groupes X ou les silanes (b) pouvant être remplacés en partie ou en totalité par des composés organiques comportant au moins deux groupes Y, et
le composant (A) et/ou le composant (B) contenant en outre un silane hydrolysable (c) avec un groupe carboné non-hydrolysable comportant en moyenne de 2 à 30 atomes de fluor liés à un ou plusieurs atomes de carbone aliphatiques, séparés par au moins deux atomes de l'atome de silicium.

12. Système de revêtement bicomposant auto-réticulant selon la revendication 11, **caractérisé par le fait que** le composant (A) et/ou le composant (B) contient en outre des nanoparticules solides minérales (d) éventuellement modifiées en surface.

13. Système de revêtement bicomposant auto-réticulant selon la revendication 11 ou 12, **caractérisé par le fait que** le groupe électrophile X est un groupe époxyde, anhydride, halogénure d'acide ou isocyanato.

14. Système de revêtement bicomposant auto-réticulant selon l'une des revendications 11 à 13, **caractérisé par le fait que** le groupe nucléophile Y est un groupe amino ou hydroxyle.

15. Système de revêtement bicomposant auto-réticulant selon l'une des revendications 11 à 14, **caractérisé par le fait que** le fluorosilane (c) est co-condensé dans le composant (A) précondensé.

16. Système de revêtement bicomposant auto-réticulant selon l'une des revendications 12 à 15, **caractérisé par le fait que** le composant (B) comprend un aminosilane hydrolysable et des nanoparticules solides minérales (d), les nanoparticules solides minérales étant modifiées en surface par au moins une partie de l'aminosilane.

17. Système de revêtement bicomposant auto-réticulanî selon l'une des revendications 12 à 15, **caractérisé par le fait que** le composant (A) et/ou le composant (B) contient des nanoparticules solides minérales (d) modifiées en surface avec au moins une partie du fluorosilane (c).
